# EUROPÄISCHE PATENTSCHRIFT

(11) **EP 3 247 214 B1**
(45) Veröffentlichungstag und Bekanntmachung des Hinweises auf die Patenterteilung: **05.05.2021**
(21) Anmeldenummer: 15708843.6
(22) Anmeldetag: 11.03.2015
(51) Int. Cl.: A21C 11/00, A21C 11/08, A21C 11/10

(54) **TEIGVERARBEITUNGSMASCHINE, VERFAHREN ZUR HERSTELLUNG VON TEIGWAREN MIT EINER SOLCHEN TEIGVERARBEITUNGSMASCHINE SOWIE DEREN VERWENDUNG UND TEIGROHLINGSVERBUND**
DOUGH PROCESSING MACHINE, METHOD FOR PREPARING DOUGH PRODUCTS WITH SUCH A DOUGH PROCESSING MACHINE AS WELL AS THEIR USE, AND PRE-BAKED DOUGH COMPOUND
MACHINE DE TRAITEMENT DE PÂTES, PROCÉDÉ DE FABRICATION DE PÂTES AVEC UNE TELLE MACHINE DE TRAITEMENT DE PÂTES ET SON UTILISATION ET COMPOSITE D'ÉBAUCHE DE PÂTES

(30) Priorität: 19.01.2015 EP 15151680
(43) Veröffentlichungstag der Anmeldung: 29.11.2017
(73) Patentinhaber: Galileo Lebensmittel GmbH & Co. KG, 54311 Trierweiler (DE)
(72) Erfinder: LA VECCHIA, Stefano, 54340 Longuich (DE)
(74) Vertreter: Patentanwälte Olbricht Buchhold Keulertz
(86) Internationale Anmeldenummer: PCT/EP2015/055105
(87) Internationale Veröffentlichungsnummer: WO 2016/116173

(56) Entgegenhaltungen:
- DE-A1- 2 062 745
- US-A- 3 937 848
- US-A- 3 947 597
- US-A- 4 800 807
- US-A- 5 306 133
- US-A1- 2008 026 091

## Beschreibung

Die Erfindung betrifft eine Teigverarbeitungsmaschine gemäß Anspruch 1, ein Verfahren zur Herstellung von Teigwaren mit einer solchen Teigverarbeitungsmaschine nach Anspruch 9, eine Verwendung einer solchen Teigverarbeitungsmaschine nach Anspruch 13 und einen Teigrohlingsverbund nach Anspruch 14.

Aus dem Stand der Technik ist es bekannt, aus einer Teigbahn einzelne Teigrohlinge auszustechen, um diese anschließend weiter zu bearbeiten. Beispielsweise werden die Teigrohlinge durch Vorbacken, Belegen mit Tomatensoße und Pizzabelägen und anschließendem Frosten zu Tiefkühlpizzen weiterverarbeitet.

Aus der US 5,306,133 ist ein Teigverarbeitungssystem zum Unterteilen einer Teigbahn in mehrere getrennte Teile.

US 3,937,848 zeigt ein Verfahren zur Herstellung eines Teigmaterials, wobei das Verfahren ein Walzen und Schneiden des Teigmaterials in ein Teigband vorsieht.

Aus US 3,947,597 ist ein Verfahren zur kontinuierlichen Rückführung eines beim Schneiden von Teigstücken aus einem Teigband zurückbleibenden Rests zu einem Mischer bekannt.

US 4,800,807 beschreibt eine Vorrichtung zum Herstellen von Pita-Teigrohlingen sowie ein entsprechendes Verfahren.

Aus US 2008/0026091 A1 ist eine Teigschneidevorrichtung bekannt, die eine Trommel mit Ausstechformen aufweist, wobei die Ausstechformen in linearen Ausstechverbünden angeordnet sind.

Nachteilhaft ist die geringe Fertigungsgeschwindigkeit, wodurch entweder nur wenige Teigwaren aus den Teigrohlingen herstellbar sind oder aber große Fertigungshallen mit sehr großen Fertigungsstraßen erforderlich sind. Außerdem stellt es sich als Nachteil heraus, dass die Teigwaren als Einzelportionen einen hohen Verpackungsaufwand Aufwand erfordern. Der sich aus Folienverpackung, Faltkarton, Umkarton und Palettierung zusammensetzt. Das Verpacken von mehreren Teigwaren in einem Faltkarton erfordert Schutzmaßnahmen, um gegenseitige Beschädigungen der Teigwaren zu vermeiden.

Aufgabe der Erfindung ist es daher, eine Teigverarbeitungsmaschine zur Herstellung von Teigwaren und ein Verfahren bereitzustellen, mit welchen die Nachteile des Standes der Technik beseitigt werden und mit denen ein hohes Produktionsvolumen bei geringem Verpackungsaufwand ermöglicht wird. Die Produktionskosten sollen gering und die Variabilität der Form der Teigwaren hoch sein. Eine gute Portionierbarkeit der Teigwaren ist ein weiteres Ziel.

Hauptmerkmale der Erfindung sind in den Ansprüchen 1, 9, 13 und 14 angegeben. Ausgestaltungen sind Gegenstand der Ansprüche 2 bis 8 und 10 bis 12.

Die Erfindung betrifft eine Teigverarbeitungsmaschine mit einem ersten Förderband zum Fördern einer Teigbahn und mit einem Ausstechwerkzeug zum Ausstechen von Teigrohlingen, wobei das Ausstechwerkzeug eine um eine Trommelachse rotierbar gelagerte Trommel aufweist, die an ihrem Umfang mit nach außen ragenden Stechkanten vorgesehen ist, mit denen die Trommel gegenüber und/oder auf dem ersten Förderband läuft, wobei mehrere einzelne Ausstechformen die Stechkanten bilden, wobei die Ausstechformen in Ausstechverbünde mit jeweils wenigstens zwei Ausstechformen angeordnet sind, wobei mehrere Ausstechverbünde über den Umfang der Trommel verteilt angeordnet sind. Die Teigverarbeitungsmaschine ist dadurch gekennzeichnet, dass die Ausstechformen eines Ausstechverbunds über Unterbrechungen in den Stechkanten miteinander in Verbindung stehen und dass die beiden Ausstechformen am Ende der Reihe der Ausstechformen eines Ausstechverbunds jeweils eine Unterbrechung aufweisen, und die anderen Ausstechformen in zentraler Position zwischen zwei weiteren Ausstechformen jeweils zwei Unterbrechungen aufweisen.

Mit einer solchen Teigverarbeitungsmaschine lassen sich auf einfache Weise Teigrohlinge ausstechen. Dabei können durch die kontinuierliche und harmonische Rotation der Trommel kontinuierlich Teigrohlinge aus einer Teigbahn auf dem ersten Förderband ausgestochen werden. Die hierzu quer zum ersten Förderband ausgerichtete Trommelachse ermöglicht es, dass Ausstechen auf einen sehr kurzen Streckenabschnitt des ersten Förderbands zu begrenzen. Entsprechend kurz ist das erste Förderband ausgestaltbar. Zum Ausstechen sollten das erste Förderband und die Trommel synchronisiert angetrieben sein. Insbesondere sollte die Umfangsgeschwindigkeit der Trommel der Vorschubgeschwindigkeit des gegenüberstehenden ersten Förderbandes entsprechen. Als Ausstechformen können beliebige Umfangsgeometrien gewählt werden, insbesondere eignen sich jedoch für die meisten Produkte runde und/oder ovale Umfänge. Optional kann durch einen Austausch der Trommel bzw. zumindest der Stechkanten zwischen unterschiedlichen Umfangsgeometrien gewechselt werden. Entsprechend liegt eine hohe Variabilität bei geringen Produktionskosten vor.

In einer näheren Ausgestaltung der Teigverarbeitungsmaschine sind die Ausstechformen in Ausstechverbünde mit jeweils wenigstens zwei Ausstechformen unterteilt, wobei die Ausstechformen eines Ausstechverbunds über Unterbrechungen in den Stechkanten miteinander in Verbindung stehen, insbesondere um einen verbindenden Teigsteg zwischen benachbarten Teigrohlingen eines Ausstechverbundes zu belassen. Mit Hilfe der Anordnung der Ausstechformen in Ausstechverbünden können Teigrohlinge in der Form von Teigrohlingsverbünden erhalten werden.

Vorzugsweise reihen sich die Ausstechformen eines Ausstechverbunds linear aneinander. Ein Ausstechverbund kann insbesondere aus zwei bis zehn, vorzugsweise zwei bis sechs, linear aneinandergereihten Ausstechformen bestehen. Besonders bevorzugt sind die linear aneinander gereihten Ausstechformen eines Ausstechverbunds über einen (Teil-)Umfang der Trommel quer zur Trommelachse angeordnet. Damit kann eine im Wesentlichen parallele Ausrichtung eines ersten Ausstechverbunds zum Förderband erreicht werden. Man erkennt, dass die Ausstechformen eines solchen Ausstechverbunds jeweils ein oder zwei Unterbrechungen aufweisen, je nach Lage der Ausstechform, entweder am Ende einer Reihe oder in zentraler Position zwischen zwei weiteren Ausstechformen.

Gemäß einer weiteren Ausführungsform können die Ausstechformen eines Ausstechverbunds in flächiger Form eines Dreiecks, eines Kreises oder Vierecks, insbesondere in rechteckiger Form, angeordnet sein. Dadurch wird eine flächige Anordnung der Ausstechformen eines Ausstechverbunds über einen (Teil-)Umfang der Trommel erreicht, sodass die genannten Flächen somit entsprechend gekrümmt sind. Eine Anordnung der Ausstechformen eines Ausstechverbunds in rechteckiger Form, also einer Rechteckfläche, betrifft insbesondere Anordnungen wie zwei mal zwei, drei mal drei, zwei mal vier, vier mal vier oder drei mal vier Ausstechformen. Man erkennt, dass die genannten Ausstechverbünde 4, 9, 8, 16 bzw. 12 Ausstechformen aufweisen. Man erkennt, dass die Ausstechformen eines solchen Ausstechverbunds jeweils gegebenenfalls zwei, drei oder vier Unterbrechungen aufweisen können, je nach Lage der Ausstechform, entweder an einer äußeren Ecke, in einer Außenreihe oder in innerer Position eines Ausstechverbunds.

Bei Bedarf sind Ausstechverbünde mit weiteren Anordnungen möglich. So können beispielsweise bei einer Anordnung der Ausstechformen eines Ausstechverbunds in der Form einer Kreisfläche in deren Zentrum eine Ausstechform und weitere Ausstechformen auf Kreisringen darum vorgesehen sein. Von Vorteil ist dabei eine zur Laufrichtung des ersten Förderbands im Wesentlichen parallele Ausrichtung einer Reihe von Ausstechformen eines Ausstechverbunds, umfassend die im Zentrum befindliche Ausstechform. Dies vereinfacht die weitere Prozessierung ausgeschnittener kreisförmiger Teigrohlingsverbünde.

Durch eine Anordnung der Ausstechformen in einem Ausstechverbund können die ausgestochenen Teigrohlinge eines Ausstechverbunds als zusammenhängende Einheit weiter verarbeitet werden. Durch die Verbindungen zwischen den Teigrohlingen liegen diese zudem sehr dicht beieinander, sodass nur wenig Rückteig zwischen den einzelnen Verbünden verbleibt. Hierzu sollten sich die Grundformen der Ausstechformen eines Ausstechverbundes tangieren. Um den Bereich der Tangentialberührung sollte die Unterbrechung der Stechkanten angeordnet sein. Die Ausstechformen eines Ausstechverbundes tangieren sich vorzugsweise über die volle Höhe der Teigbahn, d.h. auch im Bereich oberhalb eines Verbindungsstegs.

Durch die Ausstechverbünde wird eine sehr hohe Fertigungsgeschwindigkeit beim Ausstechen und der Weiterverarbeitung erreicht. Auch entstehen keine Probleme bei der Rückführung der Rückteigmenge.

Gleichzeitig sind die Teigrohlinge eines Verbunds relativ zueinander positioniert, sodass sie sich in einer Verpackung nicht gegenseitig beschädigen können. Entsprechend können mit einer Verpackung mehrere Teigrohlinge gemeinsam abgepackt werden. Es entsteht wenig Verpackungsmüll und die Verpackungskosten sind gering. Die verbleibenden Teigstege eignen sich zudem als Sollbruchstelle, sodass sich das Produkt gut portionieren lässt. Die Ausstechformen eines Ausstechverbundes sollten nicht mit Ausstechformen eines anderen Ausstechverbundes in Verbindung stehen. Hier liegen also keine Unterbrechungen in den Stechkanten vor. Das heißt, dass die einzelnen Ausstechformen mit Ausnahme der Unterbrechungen zur Ausbildung der Verbindungen mit benachbarten Ausstechformen einen geschlossenen Umfang aufweisen.

Bevorzugt weist jede der Unterbrechungen eine Länge auf, die kleiner als 20%, vorzugsweise kleiner als 18% und besonders bevorzugt kleiner als 15% der Umfangslänge der jeweiligen Ausstechform entspricht.

In einer speziellen Ausführung ist die Anzahl an Ausstechformen pro Ausstechverbund gleich. Damit lassen sich einheitliche Verbünde von Teigrohlingen herstellen.

Des Weiteren ist es von besonderem Vorzug, wenn die Ausstechformen die gleiche Grundform aufweisen. Damit sind die späteren Teigprodukte in gleich große Stücke portionierbar.

Gemäß einer bevorzugten Ausgestaltung sind wenigstens zwei der Ausstechverbünde hintereinander gereiht und ringförmig über den Umfang der Trommel verteilt angeordnet und bilden einen ersten Ausstechring aus. Hierdurch sind auf dem ersten Förderband hintereinanderliegende Verbünde von Teigrohlingen herstellbar. Durch einen geringfügigen Abstand zwischen den Ausstechverbünden liegen die ausgestochenen Teigrohlingsverbünde einzelnen separiert auf dem ersten Förderband.

Weiterhin ist von einer Variante der Erfindung vorgesehen, dass wenigstens zwei der Ausstechverbünde hintereinander gereiht und ringförmig über den Umfang der Trommel verteilt angeordnet sind und einen zweiten Ausstechring ausbilden. Mithin entstehen zwei nebeneinanderliegende Reihen mit Teigrohlingsverbünden beim Ausstechen. Es besteht die Option, eine Vielzahl an Ausstechringen vorzusehen, wobei Ausstechformen eines Ausstechverbundes nicht mit Ausstechformen eines anderen Ausstechverbundes in Verbindung stehen. Durch die Wahl der Anzahl der Ausstechring können Teigrohlinge über die gesamte Breite des ersten Förderbandes ausgestochen werden.

In einer speziellen Weiterentwicklung der Erfindung sind Ausstechverbünde von benachbarten Ausstechringen um einen Drehwinkel um die Trommelachse versetzt zueinander angeordnet, vorzugsweise um die Hälfte der Länge eines Austauschverbunds. Hierdurch entsteht ein stabiles Netz des verbleibenden Rückteigs, das auf einfache Weise von den Teigrohlingen getrennt, bzw. von dem Förderband abgehoben werden kann.

Es ist von Vorteil, wenn die Ausstechformen jeweils einen Formboden aufweisen, der von den Stechkanten eingefasst ist. Hierdurch werden die Stechkanten stabil gelagert. Ein solcher Formboden kann derart tief angeordnet sein, dass er nicht mit der Teigbahn in Kontakt tritt, d.h. er nähert sich dem Förderband auf einen Abstand der Größer ist als die zu verarbeitende Teigbahn. Optional kann der Formboden jedoch auch eine dreidimensionale Struktur zur Ausbildung einer Oberflächenkontur am Teigrohling ausbilden.

Für viele Anwendungsfälle genügt es, wenn das Förderband gegenüber dem Ausstechwerkzeug eine ebene Oberfläche ausbildet. Es entstehen hierdurch Teigrohlinge mit ebenem Boden. Optional sind jedoch auch auf dem ersten Förderband dreidimensionale Strukturen zur Ausbildung einer Oberflächenkontur am Teigrohling ausbildbar. Diese sind dann mit den Stechkanten zu synchronisieren.

Damit die Stechkanten ein gutes Ausstechergebnis erzielen, sollte das Förderband gegenüber dem Ausstechwerkzeug über eine Stützvorrichtung geführt sein, insbesondere indem es auf einer ebenen Oberfläche gelagert ist.

Um eine hohe Formqualität der Teigrohlinge zu erreichen, sollten die Ausstechformen jeweils eine Entlüftungsöffnung aufweisen. Hierdurch wird ein Entweichen von Druckluft zwischen den Stechkanten und dem Teigrohling vermieden. Eine solche Entlüftungsöffnung kann insbesondere im Formboden vorgesehen sein.

Eine weitere Ausgestaltung der Teigverarbeitungsmaschine sieht vor, dass in Laufrichtung des ersten Förderbandes hinter der Trommel ein zweites Förderband oberhalb des ersten Förderbands angeordnet ist, wobei eine Umlenkrolle, um die das zweite Förderband umgelenkt wird, beabstandet sowie insbesondere quer ausgerichtet oberhalb des ersten Förderbands angeordnet ist, und wobei das zweite Förderband auf der Unterseite der Umlenkrolle im Gleichlauf und auf der Oberseite der Umlenkrolle im Gegenlauf zum ersten Förderband angetrieben ist. Damit ist es möglich, ein Netz aus Rückteig über die Umlenkrolle vom ersten Förderband abzuheben und weg zu führen. Das heißt, eine auf dem ersten Förderband geförderte Teigbahn wird exklusive der ausgestochenen Teigrohlinge über die Umlenkrolle auf das zweite Förderband umgelenkt. Der Rückteig wird bevorzugt aufbereitet und/oder mit frischem Teig vermengt und erneut auf das erste Förderband als Teigbahn aufgebracht. Hierzu kann das zweite Förderband zu einer Teigbearbeitungsmaschine führen, mit welcher der Rückteig aufbereitet und mit frischem Teig vermengt wird.

Das erste Förderband kann gemäß einer weiteren Ausgestaltung der Teigverarbeitungsmaschine als ein einziges Förderband, als zwei Förderbänder oder als eine Vielzahl von Förderbändern ausgestaltet sein. Im Falle von zwei oder mehr ersten Förderbändern sind diese im Wesentlichen in einer Ebene gleichlaufend hintereinander angeordnet, wobei zwei aneinanderstoßende Förderbänder einen geeigneten Abstand, einen Bandübergang, aufweisen können. Die zwei oder mehr ersten Förderbänder können bei Bedarf in einem Winkel zueinander laufend angeordnet sein.

Eine Weiterentwicklung der Teigverarbeitungsmaschine sieht, vorzugsweise für den Fall der Ausgestaltung der Ausstechformen eines Ausstechverbunds in der Flächenform eines Dreiecks, eines Kreises oder eines Vierecks, insbesondere in rechteckiger Form, vor, dass das erste Förderband wenigstens zwei Förderbänder umfasst, die im Wesentlichen in einer Ebene gleichlaufend hintereinander angeordnet sind. Zwischen den beiden genannten ersten Förderbändern ist in Laufrichtung hinter der Trommel ein Bandübergang vorgesehen. Im Bereich des Bandübergangs sind die Teigreste zwischen den Teigrohlingen eines Teigrohlingsverbundes, d.h. die Teigreste in den Zwischenräumen, entfernbar. Diese Teigreste in den Zwischenräumen sind nicht miteinander verbunden. Diese sind im Bereich des Bandübergangs durch Druckluft oder Ausstoßzylinder entfernbar. Insbesondere sind diese Teigreste in den Zwischenräumen nach unten mit Druckluft ausstoßbar. Während des Bandübergangs sind die Teigrohlinge der Teigrohlingsverbünde über, vorzugsweise teflonisierte, Schienen zu dem in Laufrichtung hinteren weiteren ersten Förderband gestützt führbar. Die entfernten Teigreste in den Zwischenräumen können bevorzugt als ein Rückteig aufbereitet und/oder mit frischem Teig vermengt und erneut auf das erste Förderband als Teigbahn aufgebracht werden. Auch bei dieser Ausführungsform kann die auf dem ersten Förderband geförderte Teigbahn, hier exklusive der ausgestochenen Teigrohlinge und exklusive der Teigreste in den Zwischenräumen über eine Umlenkrolle auf das genannte oberhalb des ersten Förderbands angeordnete zweite Förderband umgelenkt und im oben beschriebenen Sinne als Rückteig aufbereitet werden.

Zur weiteren Bearbeitung der Teigrohlinge ist von einer optionalen Ergänzung vorgesehen, dass in Laufrichtung des ersten Förderbandes hinter der Trommel ein Belaggeber zum Belegen der Teigrohlinge beabstandet oberhalb des ersten Förderbandes angeordnet ist. Je nach gewünschtem Belag, kann der Belaggeber dazu ausgestaltet sein, fluide, pastöse oder feste Beläge auf die Teigrohlinge aufzubringen. So ist es möglich, den Belaggeber als Powershot-Station zum Aufschießen eines pastösen Belags auszubilden. Alternativ oder ergänzend kann der Belaggeber eine Wasserfallstation zum Aufbringen von festem Belag durch Herunterfallen aufweisen.

In einer speziellen Ausführungsform bestehen die Stechkanten aus Kunststoff. Dieser ist meist lebensmittelecht und beschädigt nicht das erste Förderband. In besonders bevorzugter Ausführung bestehen die Stechkanten aus Polyoxymethylen (POM). Dieses eignet sich für die Herstellung von Lebensmitteln, hat eine geringe Haftung gegenüber Teigmassen und hat eine lange Lebensdauer bei der Verarbeitung von Teig.

Um die Geometrie der Ausstechformen einfach und kostengünstig variieren zu können oder auch Verschleißteile einfach austauschen zu können, bietet es sich an, die Stechkanten an einer austauschbaren Manschette der Trommel auszubilden. Eine Trägerwalze und etwaige Lager sind so über den Lebenszyklus vieler Stechkanten und Manschetten nutzbar. Vorzugsweise besteht die Manschette aus Kunststoff, und besonders bevorzugt aus Polyoxymethylen (POM). Die Manschette kann monolithisch mit den Stechkanten ausgebildet sein. Beispielsweise ist es möglich, die Manschette aus Halb- oder Teilschalen zusammenzusetzen. Außerdem kann die Manschetten auf einer Trägerwalze der Trommel befestigt, insbesondere festgeschraubt, sein.

Zur Bearbeitung von Teig hat es sich von Vorteil erwiesen, wenn die Stechkanten auf der Innenseite einen Kantenradius haben, dessen Radius vorzugsweise zwischen 30% und 100%, weiter bevorzugt zwischen 50% und 100% und besonders bevorzugt zwischen 70% und 100% der Wandstärke der Stechkante beträgt. Dies führt dazu, dass der Umfang der ausgestochenen Teigrohlinge nicht geschnitten, sondern durch Herunterziehen des Teigs ausgeformt ist. Die Trennnaht zwischen der Stechkante und dem Förderband erfolgt am Außenumfang der Stechkante. Auf der Außenseite sollten die Stechkanten daher keinen oder einen (deutlich) kleineren Kantenradius haben als auf der Innenseite. Beim Backen des Teigs kommt es so zu einem geschlossenporigen Umfangsrand. Bei einem Schnitt auf der Innenseite der Stechkante wären die Teigporen hingegen offen. Hierzu trägt insbesondere bei, wenn die Stechkanten auf der Innenseite einen Kantenradius haben, dessen Radius wenigstens 0,5mm, vorzugsweise wenigstens 1mm und besonders bevorzugt wenigstens 1,5mm groß ist.

Ferner besteht eine Ausgestaltungsoption, bei der eine Austauschtrommel vorgesehen ist, die gegen die Trommel austauschbar ist, und an ihrem Umfang nach außen ragende Stechkanten aufweist, welche einzelne Ausstechformen ausbilden, die über den Umfang der Austauschtrommel verteilt angeordnet sind und eine andere Umfangsgeometrie haben als die Ausstechformen der Trommel. Mithin können durch einfachen Austausch der Trommel mit der Austauschtrommel Teigrohlinge mit anderer Geometrie hergestellt werden.

Ergänzt werden kann die Teigverarbeitungsmaschine mit einer Igelwalze, die in Laufrichtung des Förderbands vor dem Ausstechwerkzeug angeordnet ist. Diese Igelwalze sollte quer zum Förderband angeordnet sein und mit nach außen ragenden Spitzen gegenüber dem ersten Laufband laufen, dieses vorzugsweise jedoch nicht berühren. Die Igelwalze dient dem Perforieren der Teigbahn.

Des Weiteren kann das erste Förderband hinter der Umlenkrolle durch einen Durchlaufofen geführt sein. Alle Teigrohlinge sind so unmittelbar vor- oder ausbackbar. Sofern ein Belaggeber vorgesehen ist, kann dieser vor oder nach dem Durchlaufofen angeordnet sein.

Zur Herstellung von Tiefkühlprodukten, bietet es sich an, in Laufrichtung des Förderbands hinter dem Belaggeber und/oder dem Durchlaufofen einen Durchlauffroster vorzusehen. Dieser dient einem Herunterkühlen, insbesondere auf -40°C. Das erste Förderband sollte abschließend zu einer Packstation führen. Hier sind insbesondere eine (Schlauch-)Beutelstation, eine Faltschachtel-Station, eine Umkarton-Station und eine Palettierungsstation sinnvolle Ausgestaltungsoptionen.

Die Erfindung betrifft nach einem weiteren Aspekt außerdem ein Verfahren zur Herstellung von Teigwaren mit einer vorstehend beschriebenen Teigverarbeitungsmaschine, bei dem eine Teigbahn vor dem Ausstechwerkzeug auf das erste Förderband aufgebracht wird. Aus der Teigbahn werden dann zwischen den Stechkanten und dem ersten Förderband Teigrohlinge ausgestochen.

Durch das Verfahren werden die Vorteile der Teigverarbeitungsmaschine realisiert. Insbesondere sind auf einfache Weise, kostengünstig, schnell und kontinuierlich Teigrohlinge ausstechbar. Die Trommel ist außerdem dazu geeignet, entsprechend der Stechkantengestaltung Teigrohlinge mit beliebiger Umfangsgeometrie herzustellen. Die Teigrohlinge können anschließend zu Teigwaren weiterverarbeitet werden. Zum Aufbringen der Teigbahn vor dem Ausstechwerkzeug eignet sich eine Aufbringeinrichtung.

In spezieller Verfahrensausgestaltung bilden die Stechkanten einzelne Ausstechformen aus, die über den Umfang der Trommel verteilt angeordnet sind, wobei die Ausstechformen in Ausstechverbünde mit jeweils wenigstens zwei Ausstechformen unterteilt sind, wobei die Ausstechformen eines Ausstechverbunds über Unterbrechungen in den Stechkanten miteinander in Verbindung stehen, und wobei beim Ausstechen der Teigrohlinge ein verbindender Teigsteg zwischen Teigrohlingen eines Ausstechverbunds belassen wird.

Dadurch können die ausgestochenen Teigrohlinge eines Ausstechverbunds als zusammenhängende Einheit weiter verarbeitet werden. Durch die dichte Anordnung der Teigrohlinge entsteht wenig Rückteig und es ist eine hohe Anzahl Teigrohlinge pro Zeit fertigbar, die obendrein einfach verpackbar und später portionierbar sind. Egal ob in gefrorenem oder ungefrorenem Zustand, die Teigrohlinge lassen sich an den Verbindungsstegen einfach trennen bzw. brechen.

Es bietet sich eine Verfahrensausgestaltung an, bei welcher die Höhe der Teigbahn und das Ausstechwerkzeug so aufeinander abgestimmt sind, dass der Teigsteg eine Höhe aufweist, die zwischen 50% und 100%, vorzugsweise zwischen 60% und 100% und besonders bevorzugt zwischen 70% und 100% der Höhe der Teigbahn entspricht. Ein derart hoher Teigsteg wirkt im gefrorenen oder ausgebackenen Zustand einem Falten des Teigrohlingverbunds entgegen und führt zu einer recht hohen Formstabilität des Produktes. Das Produkt sackt dann beispielsweise nicht bei vertikaler Lagerung zusammen.

In einer weiteren Verfahrensoption wird die auf dem ersten Förderband geförderte Teigbahn exklusive der ausgestochenen Teigrohlinge nach dem Ausstechen abgehoben. Der so erhaltene Rückteig ist dann zumindest nach einer Aufbereitung wiederverwendbar. Hierzu kann eine Rückführung der abgehobenen Teigbahn zu einer Knetvorrichtung erfolgen. Von hier wird der geknetete Rücklauf dann zu einer Aufbringeinrichtung geführt, mit welcher die Teigbahn vor dem Ausstechwerkzeug auf das erste Förderband aufgebracht wird.

Eine Weiterentwicklung des Verfahrens sieht, vorzugsweise für den Fall der Ausgestaltung der Ausstechformen eines Ausstechverbunds in der Flächenform eines Dreiecks, eines Kreises oder eines Vierecks, insbesondere in rechteckiger Form, vor, dass Teigreste zwischen den Teigrohlingen eines Ausstechverbundes, d.h. die Teigreste in den Zwischenräumen der Teigrohlingsverbünde, im Bereich eines Bandübergangs entfernt werden. Dies erfolgt vorzugsweise nach dem Abheben der auf dem ersten Förderband geförderten Teigbahn exklusive der ausgestochenen Teigrohlinge. Im Bereich des Bandübergangs werden die, nicht miteinander verbunden, Teigreste in den Zwischenräumen entfernt. Diese werden im Bereich des Bandübergangs durch Druckluft oder Ausstoßzylinder entfernt. Insbesondere werden diese Teigreste in den Zwischenräumen nach unten mit Druckluft ausgestoßen. Während des Bandübergangs werden die Teigrohlinge der Teigrohlingsverbünde über, vorzugsweise teflonisierte, Schienen zu einem in Laufrichtung hinteren weiteren ersten Förderband gestützt geführt. Die entfernten Teigreste in den Zwischenräumen sind wiederum als ein Rückteig dann zumindest nach einer Aufbereitung wiederverwendbar. Hierzu kann eine Rückführung der entfernten Teigreste zu einer Knetvorrichtung erfolgen. Von hier wird der geknetete Rücklauf dann zu einer Aufbringeinrichtung geführt, mit welcher die Teigbahn vor dem Ausstechwerkzeug auf das erste Förderband aufgebracht wird

Das Verfahren kann außerdem dadurch ergänzt werden, dass die Teigrohlinge auf dem ersten Förderband nach dem Ausstechen mit einem Belag belegt werden. Vorzugsweise erfolgt dies erst nach dem Abheben und, gegebenenfalls, nach dem Entfernen der Teigreste in den Zwischenräumen. Beispielhaft kann es sich bei dem Belag um Tomatensoße und anschließend Beläge wie Pilze, Salami, Schinken, Käse und weitere Pizzabeläge handeln.

Besonders gut geeignet ist das Verfahren, wenn ein Einfrieren und ein Verpacken der belegten Teigrohlinge in Verpackungsgrößen entsprechend der Anzahl an Ausstechformen gemäß der Ausstechverbünde und insbesondere der Form der Ausstechverbünde erfolgt.

Für die Verarbeitung bestimmter Teigsorten kann das Verfahren um ein Igeln bzw. Perforieren der Teigbahn vor dem Ausstechen ergänzt werden.

Das Verfahren kann jeweils von den Vorrichtungsmerkmalen der vorstehend beschriebenen Teigverarbeitungsmaschine Gebrauch machen.

Ferner betrifft die Erfindung die Verwendung einer wie vorstehend beschriebenen Teigverarbeitungsmaschine zur Herstellung von Teigrohlingen. Hiermit lassen sich sowohl die jeweiligen Vorteile der Teigverarbeitungsmaschine als auch die verfahrensgemäßen Vorteile erzielen.

Außerdem betrifft die Erfindung einen Teigrohlingsverbund mit zwei bis zehn scheibenförmigen Teigrohlingen, die eine runde oder ovale Grundform mit flacher Oberseite und flacher Unterseite aufweisen sowie linear hintereinander gereiht sind, wobei benachbarte Teigrohlinge jeweils über einen Teigsteg (vorzugsweise originär monolithisch ausgebildet, d.h. nicht wie Zwillingsbrötchen zusammengebacken) miteinander verbunden sind, wobei jeder Teigsteg eine Höhe zwischen 50% und 100% der angrenzenden Teigrohlinge aufweist, wobei jeder Teigsteg eine Stegbreite aufweist, die kleiner ist als 20% der Umfangslänge der jeweils angrenzenden Teigrohlinge. Ein solcher Teigrohlingsverbund kann insbesondere aus zwei bis zehn, vorzugsweise zwei bis sechs, linear aneinandergereihten Teigrohlingen bestehen. Man erkennt, dass die Teigrohlinge eines solchen Teigrohlingsverbunds jeweils ein oder zwei Teigstege aufweisen, je nach Lage der Teigrohlinge, entweder am Ende einer Reihe oder in zentraler Position zwischen zwei weiteren Teigrohlingen eines Teigrohlingsverbunds.

Weiterhin betrifft die Erfindung einen Teigrohlingsverbund mit wenigstens drei, vorzugsweise wenigstens vier, scheibenförmigen Teigrohlingen, wobei die Teigrohlinge eine runde oder ovale Grundform mit flacher Oberseite und flacher Unterseite aufweisen und der Teigrohlingsverbund in der Flächenform eines Dreiecks, eines Kreises oder eines Vierecks, insbesondere in rechteckiger Form, ausgestaltet ist, wobei benachbarte Teigrohlinge eines Teigrohlingsverbunds jeweils über einen Teigsteg (vorzugsweise originär monolithisch ausgebildet, d.h. nicht wie Zwillingsbrötchen zusammengebacken) miteinander verbunden sind, wobei jeder Teigsteg eine Höhe zwischen 50% und 100% der angrenzenden Teigrohlinge aufweist, wobei jeder Teigsteg eine Stegbreite aufweist, die kleiner ist als 20% der Umfangslänge der jeweils angrenzenden Teigrohlinge. Eine solcher Teigrohlingsverbund in viereckiger, vorzugsweise rechteckiger, Form betrifft insbesondere Anordnungen wie zwei mal zwei, drei mal drei, zwei mal vier, vier mal vier oder drei mal vier Teigrohlinge. Man erkannt, dass die genannten Teigrohlingsverbunde 4, 9, 8, 16 bzw. 12 Teigrohlinge aufweisen, die über Teigstege miteinander verbunden sind. Man erkennt, dass die Teigrohlinge eines solchen Teigrohlingsverbunds gegebenenfalls zwei, drei oder vier Teigstege aufweisen können, je nach Lage der Teigrohlinge, entweder an einer äußeren Ecke, in einer Außenreihe oder in innerer Position eines Teigrohlingsverbunds.

Bei Bedarf sind Teigrohlingsverbünde mit alternativen Anordnungen möglich. So können beispielsweise bei einer Anordnung der Teigrohlinge eines solchen Teigrohlingsverbunds in der Form einer Kreisfläche in deren Zentrum ein Teigrohling und weitere Teigrohlinge auf Kreisringen darum vorgesehen sein.

Derartige Teigrohlingsverbünde erlauben eine hohe Produktions- und Beleggeschwindigkeit, sind kostengünstig und schnell abpackbar und vom Verbraucher einfach portionierbar, insbesondere vor oder nach dem Zubereiten.

Die Teigrohlinge eines Teigrohlingsverbunds können vorteilhaft als zusammenhängende Einheit weiter verarbeitet werden. Durch die dichte Anordnung der Teigrohlinge entsteht wenig Rückteig und es ist eine hohe Anzahl Teigrohlinge pro Zeit fertigbar. Egal ob in gefrorenem oder ungefrorenem Zustand, die Teigrohlinge eines Teigrohlingsverbunds lassen sich an den Verbindungsstegen einfach trennen bzw. brechen.

Unter Teig im Sinne der Erfindung ist eine essbare Backware zu verstehen, z.B. basierend auf Mehl und Eiern.

Vorzugsweise haben die Teigstege eine Höhe, die zwischen 50% und 100%, weiter bevorzugt zwischen 60% und 100% und besonders bevorzugt zwischen 70% und 100% der Höhe der Teigbahn entspricht. Ein derart hoher Teigsteg wirkt im gefrorenen oder ausgebackenen Zustand einem Falten des Teigrohlingverbunds entgegen und führt zu einer recht hohen Formstabilität des Produktes. Das Produkt sackt dann beispielsweise nicht bei vertikaler Lagerung zusammen.

Die Stegbreite der Teigstege ist kleiner als 20% der Umfangslänge der jeweils angrenzenden Teigrohlinge. Sie beträgt weiter bevorzugt weniger als 15% und besonders bevorzugt weniger als 12%.

Gemäß einer näheren Ausgestaltung sind auf der Oberseite der Teigrohlinge umfangsseitige Kantenradien ausgebildet, die größer sind als die Kantenradien auf der Unterseite. Insbesondere sind die oberen Kantenradien wenigstens doppelt so groß wie die unteren Kantenradien, und besonders bevorzugt wenigstens dreimal so groß.

Auch die weiteren beschriebenen Merkmale der Teigrohlinge können unabhängig von Herstellungsverfahren erfindungswesentlicher Gegenstand des Teigrohlingverbundes sein.

Der vorstehend beschriebene Teigrohlingsverbund lässt sich beispielsweise mit einer zuvor beschriebenen Teigverarbeitungsmaschine, durch deren Verwendung oder ein zuvor beschriebenes Verfahren herstellen.

Ein weiterer Aspekt betrifft einen Teigrohlingsverbund erhältlich durch ein Verfahren gemäß einer der oben beschriebenen Ausführungen.

Weitere Merkmale, Einzelheiten und Vorteile der Erfindung ergeben sich aus dem Wortlaut der Ansprüche sowie aus der folgenden Beschreibung von Ausführungsbeispielen anhand der Zeichnungen. Es zeigen:
- Fig. 1: eine perspektivische Ansicht eines Ausstechwerkzeugs;
- Fig. 2: einen vergrößerten Ausschnitt des Ausstechwerkzeugs nach Fig. 1;
- Fig. 3: eine perspektivische Ansicht einer Teilschale einer Manschette mit Stechkanten;
- Fig. 4: eine perspektivische Ansicht einer Abwicklung der Teilschale nach Fig. 3;
- Fig. 5: einen Längsschnitt durch die Abwicklung nach Fig. 4;
- Fig. 6: einen Querschnitt durch die Abwicklung nach Fig. 4;
- Fig. 7: einen Längsschnitt durch eine Teigverarbeitungsmaschine mit Teigbahn;
- Fig. 8: eine perspektivische Ansicht eines Verbundes aus fünf Teigrohlingen;
- Fig. 9: eine perspektivische Ansicht eines Ausstechwerkzeugs nach einer alternativen Ausführung;
- Fig. 10: einen vergrößerten Ausschnitt des Ausstechwerkzeugs nach Fig. 9;
- Fig. 11: eine perspektivische Ansicht einer Teilschale einer Manschette mit Stechkanten nach einer alternativen Ausführung des Ausstechwerkzeugs;
- Fig. 12: eine Aufsicht der Teilschale nach Fig. 11;
- Fig. 13: einen Längsschnitt entlang A-A durch die Teilschale nach Fig. 12;
- Fig. 14: einen Querschnitt entlang B-B durch die Teilschale nach Fig. 12 und
- Fig. 15: eine perspektivische Ansicht eines Verbundes aus sechszehn Teigrohlingen.

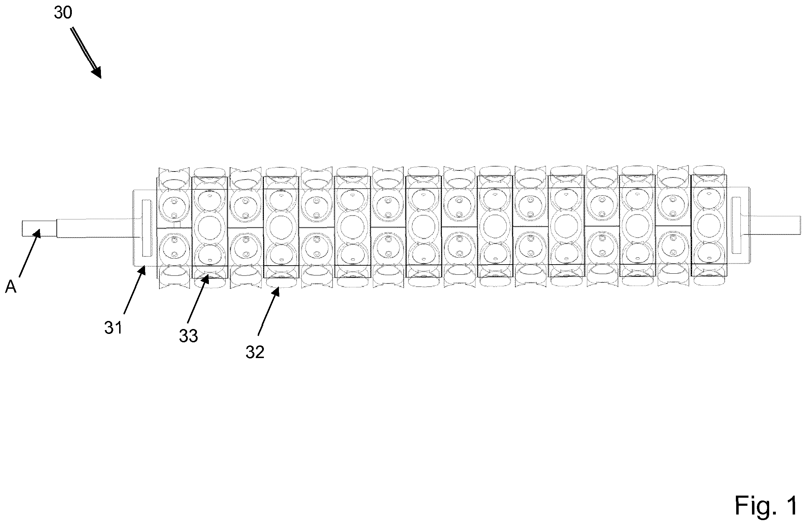

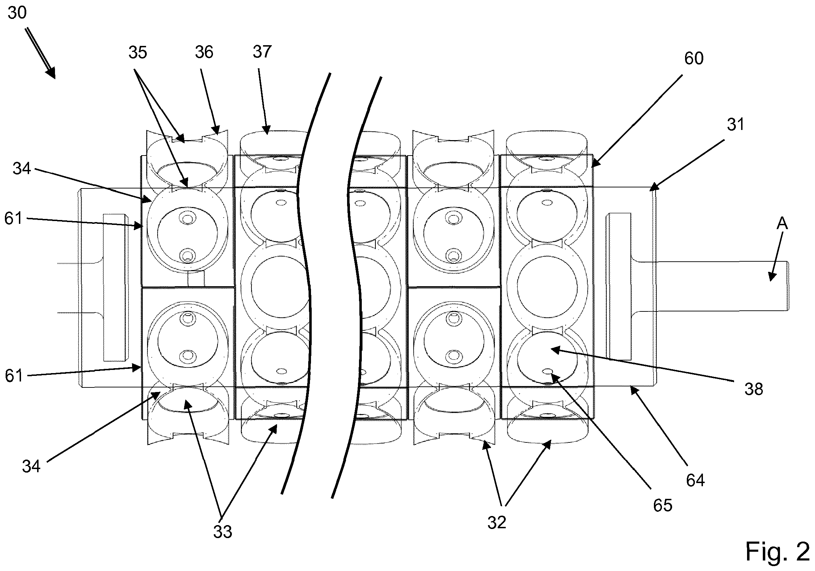

**Fig. 1** zeigt ein Ausstechwerkzeug 30 zum Ausstechen von Teigrohlingen. Dieses verfügt über eine um eine Trommelachse A rotierbar gelagerte Trommel 31, die an ihrem Umfang nach außen ragende Stechkanten 32 hat. Die Stechkanten 32 bilden einzelne Ausstechformen 33 aus, die über den Umfang der Trommel 31 verteilt angeordnet sind. Bezüglich der technischen Details in Fig. 1 wird auf den vergrößerten Ausschnitt des Ausstechwerkzeugs 30 in Fig. 2 verwiesen.

In **Fig. 2** erkennt man, dass die Ausstechformen 33 insbesondere einen runden bzw. kreisförmigen Umfang aufweisen. Die Ausstechformen 33 sind in Ausstechverbünde 34 mit jeweils wenigstens zwei, hier insbesondere mit jeweils fünf Ausstechformen 33 unterteilt. Die Anzahl an Ausstechformen 33 ist also bei jedem Ausstechverbund 34 gleich. Dabei stehen die Ausstechformen 33 eines Ausstechverbunds 34 über Unterbrechungen 35 in den Stechkanten 32 miteinander in Verbindung, damit beim Ausstechen ein verbindender Teigsteg zwischen benachbarten Teigrohlingen eines Ausstechverbundes 34 verbleibt. Man erkennt, dass die fünf Ausstechformen 33 eines Ausstechverbundes 34 linear aneinandergereiht sind und nicht mit Ausstechformen 33 eines anderen Ausstechverbundes 34 in Verbindung stehen. Hierzu weisen die einzelnen Ausstechformen 33 mit Ausnahme der Unterbrechungen 35 zur Ausbildung der Verbindungen mit benachbarten Ausstechformen 33 einen geschlossenen Umfang auf.

Im Bereich der Unterbrechungen 35 tangieren sich die benachbarten Ausstechformen 33 eines Ausstechverbundes 34.

Des Weiteren sieht man, dass jeweils zwei der Ausstechverbünde 34 hintereinander gereiht und ringförmig über den Umfang der Trommel 31 verteilt angeordnet sind. Hierdurch werden ein erster Ausstechring 36, ein zweiter Ausstechring 37 und weitere Ausstechringe ausgebildet. Wie in Fig. 1 zu sehen ist, sind hier sechzehn Ausstechringe vorgesehen.

Die Stechkanten 32 von benachbarten Ausstechverbünden 34 sind dabei stets beabstandet voneinander, damit ein stabiles Netz zum Abheben des Rest- bzw. Rückteigs verbleibt. Hierzu trägt auch bei, dass die Ausstechverbünde 34 von benachbarten Ausstechringen 36, 37 um einen Drehwinkel um die Trommelachse A versetzt zueinander angeordnet sind, hier insbesondere um die Hälfte der Länge der Ausstechverbünde 34.

Ferner erkennt man in Fig. 2, dass die Ausstechformen 33 jeweils einen Formboden 38 aufweisen, der von den Stechkanten 32 eingefasst ist. Dabei weist wenigstens eine Ausstechform 33 eines Ausstechverbunds 34 eine Entlüftungsöffnung 65 auf, die hier insbesondere im Formboden 38 angeordnet ist.

Die Ausgestaltung des in den Fig. 1 und 2 gezeigten Ausstechwerkzeugs 30 weist die Besonderheit auf, dass die Stechkanten 32 an einer austauschbaren Manschette 60 der Trommel 31 ausgebildet sind. Hierzu ist die Manschette 60 auf einer Trägerwalze 64 der Trommel 31 befestigt. Jeweils ein Ausstechverbund 34 liegt dabei auf einer Teilschale 61 der Manschette 60.

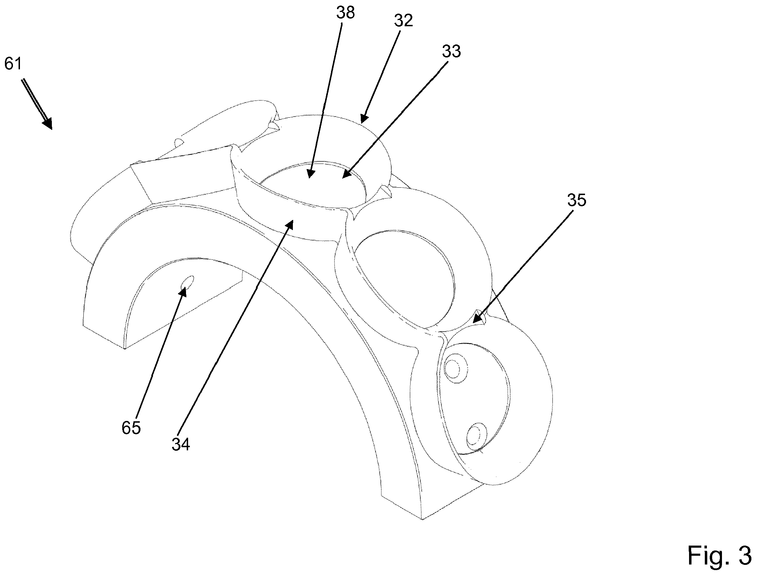

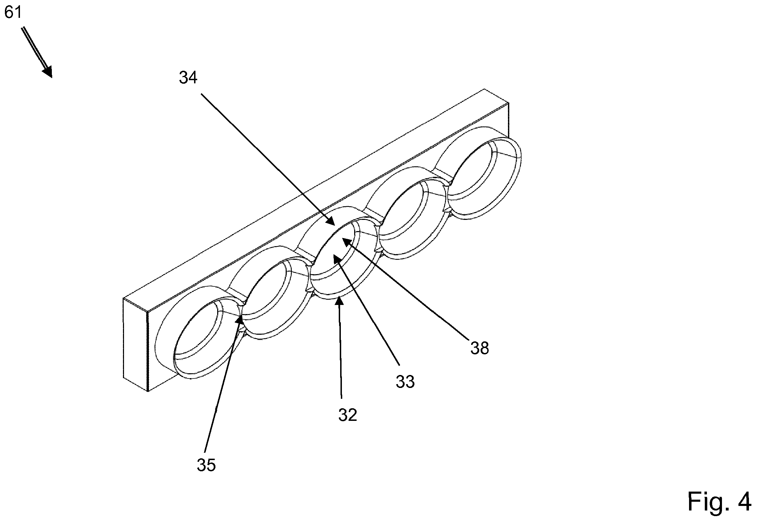

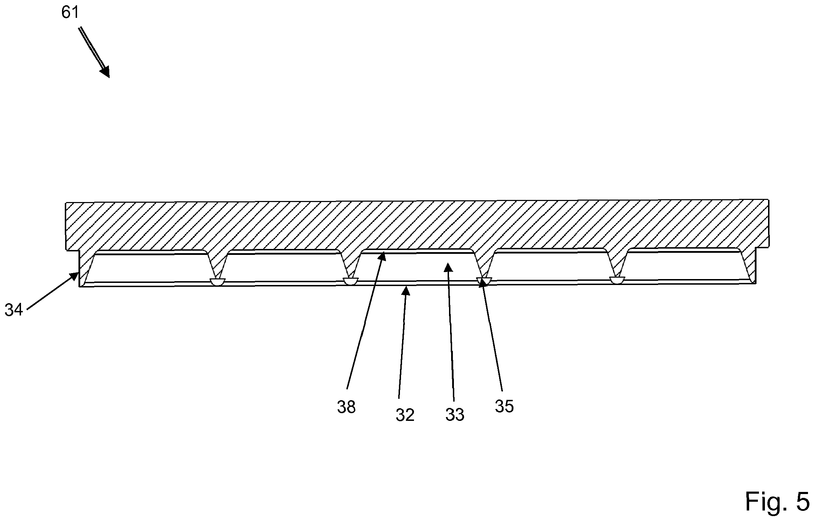

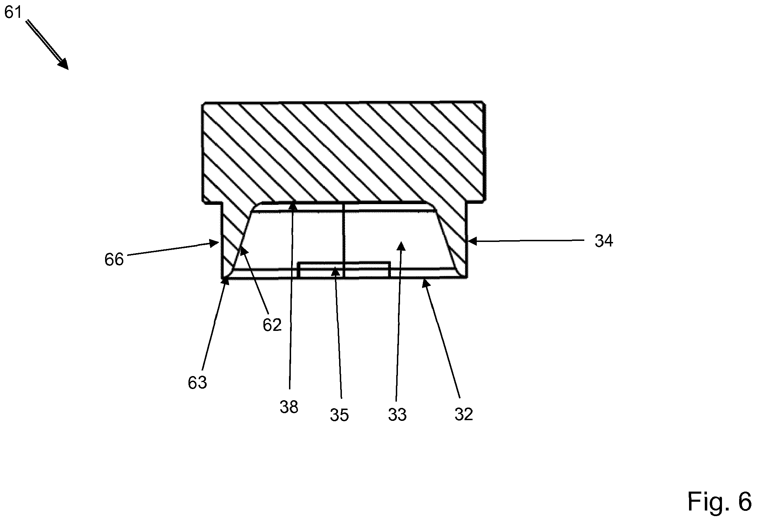

Eine solche Teilschale 61 ist in unterschiedlichen Ansichten in den **Fig. 3 bis 6** dargestellt. So sieht man eine perspektivische Ansicht der Teilschale 61 in Fig. 3, eine perspektivische Ansicht einer Abwicklung der Teilschale nach Fig. 3 in Fig. 4, einen Längsschnitt durch die Abwicklung nach Fig. 4 in Fig. 5 und einen Querschnitt durch die Abwicklung nach Fig. 4 in Fig. 6. Die Teilschale 61 ist inklusive der Stechkanten 32 monolithisch ausgebildet, nämlich aus Kunststoff und insbesondere aus Polyoxymethylen (POM) wie POM-C. Nur in Fig. 3 ist dargestellt, wie sich ein Loch vom Formboden 38 nach innen durch die Teilschale 61 erstreckt. Ein solches Loch kann als Schraubenloch oder als Entlüftungsloch 65 genutzt werden.

Insbesondere in **Fig. 6** wird ersichtlich, dass die Stechkanten 32 auf der Innenseite 62 einen Kantenradius 63 haben, dessen Radius zwischen 30% und 100%, bevorzugt zwischen 50% und 100% und besonders bevorzugt zwischen 70% und 100% der Wandstärke der Stechkante 32 beträgt. Hier ist er annähernd 100% groß. Auf der Außenseite 66 haben die Stechkanten 32 hingegen keinen bzw. einen deutlich kleineren Kantenradius (maximal 30% des Innenradius) als auf der Innenseite 62.

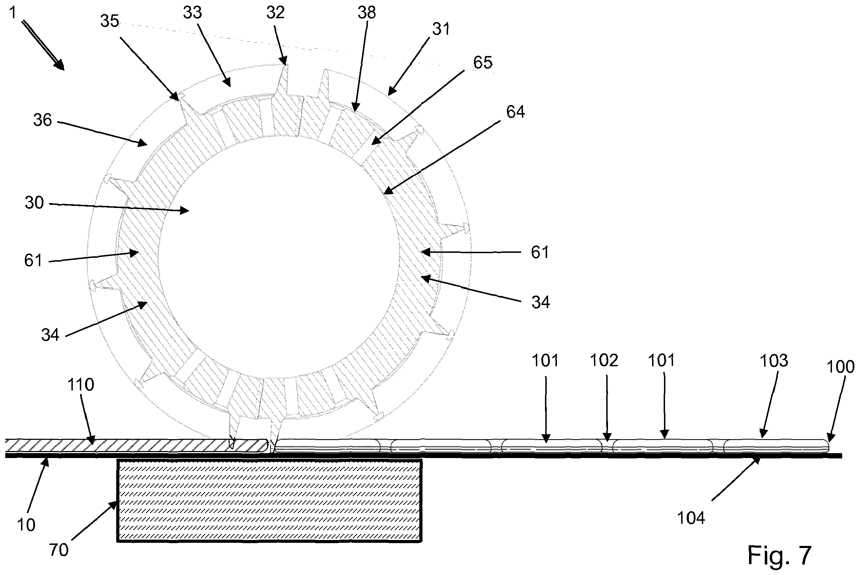

**Fig. 7** zeigt einen Längsschnitt durch eine Teigverarbeitungsmaschine 1 inklusive einer Teigbahn 110. Die Teigverarbeitungsmaschine 1 verfügt über ein erstes Förderband 10 zum Fördern der Teigbahn 110. Dem Förderband 10 liegt ein Ausstechwerkzeug 30 zum Ausstechen von Teigrohlingen 101 auf dem ersten Förderband 10 gegenüber. Das Ausstechwerkzeug 30 weist eine Trommel 31 auf, die um eine quer zum Förderband 10 ausgerichtete Trommelachse A rotierbar gelagert ist. Die Trommel 31 hat an ihrem Umfang nach außen ragende Stechkanten 32, mit denen die Trommel 31 gegenüber und/oder auf dem ersten Förderband 10 läuft. Hierzu sind das erste Förderband 10 und die Trommel 31 synchronisiert angetrieben. Insbesondere entspricht die Umfangsgeschwindigkeit der Trommel 31 der Vorschubgeschwindigkeit des ersten Förderbandes 10.

Die Stechkanten 32 bilden einzelne Ausstechformen 33 aus, die über den Umfang der Trommel 31 verteilt angeordnet sind. In dem Schnitt sieht man insbesondere zwei Teilschalen 61 gemäß den Figuren 3 bis 6, die auf der Trägerwelle 64 festgelegt sind.

Das erste Förderband 10 ist gegenüber dem Ausstechwerkzeug 30 über eine Stützvorrichtung 70 geführt, insbesondere auf einer ebenen Oberfläche gelagert. Hierdurch hängt das erste Förderband 10 in diesem Bereich nicht durch und wird über die gesamte Breite des Ausstechwerkzeugs 30 gegenüber den Stechkanten 32 in definiertem Abstand gehalten oder an die Stechkanten 32 angedrückt. Dies führt auch dazu, dass das Förderband gegenüber dem Ausstechwerkzeug 30 eine ebene Oberfläche ausbildet. Optional könnte jedoch auch vorgesehen sein, dass auf dem ersten Förderband 10 dreidimensionale Strukturen zur Ausbildung einer Oberflächenkontur am Teigrohling 101 ausgebildet sind.

Mit einer solchen Teigverarbeitungsmaschine 1 ist es nunmehr möglich, ein Verfahren durchzuführen, bei dem zunächst eine Teigbahn 110 vor dem Ausstechwerkzeug 30 auf das erste Förderband 10 aufgebracht wird. Die Teigbahn 110 kann hierzu vor dem Ausstechwerkzeug 30 mit einer Aufbringeinrichtung auf das erste Förderband 10 aufgebracht werden, beispielsweise einem Teigextruder. Anschließend können mit dem Ausstechwerkzeug 30 Teigrohlinge 101 aus der Teigbahn 110 zwischen den Stechkanten 32 und dem ersten Förderband 10 ausgestochen werden. Wie man erkennen kann, tritt der Formboden 38 hierbei nicht mit der Teigbahn 110 in Kontakt. Er nähert sich dem ersten Förderband 10 nur auf einen Abstand der Größer ist als die Höhe zu verarbeitende Teigbahn 110. Optional könnte jedoch auch vorgesehen sein, dass der Formboden 38 eine dreidimensionale Struktur 39 zur Ausbildung einer Oberflächenkontur am Teigrohling 101 ausbildet.

Gut zu erkennen ist, dass die Stechkanten 32 einzelne Ausstechformen (33) ausbilden, die über den Umfang der Trommel 31 verteilt angeordnet sind und die Ausstechformen 33 in Ausstechverbünde 34 mit in dieser Ausführung jeweils fünf Ausstechformen 33 unterteilt sind, wobei die Ausstechformen 33 eines Ausstechverbunds 34 über Unterbrechungen 35 in den Stechkanten 32 miteinander in Verbindung stehen. Bei der Produktion entsteht so beim Ausstechen der Teigrohlinge 101 ein verbindender Teigsteg 102 zwischen Teigrohlingen 101 eines Ausstechverbunds 34. Wenn der Abstand der Unterbrechungen 35 in den Stechkanten 32 zum ersten Förderband 10 größer ist als die Höhe der Teigbahn 110, erstreckt sich der Teigsteg 102 zwischen Teigrohlingen 101 über die gesamte Höhe von letzteren. Es erweist sich als vorteilhaft, wenn der Teigsteg 102 eine Höhe aufweist, die zwischen 50% und 100%, vorzugsweise zwischen 60% und 100% und besonders bevorzugt zwischen 70% und 100% der Höhe der Teigbahn 110 entspricht.

Weil keine Verbindung der Ausstechformen 33 von unterschiedlichen Ausstechverbünden 34 vorliegt, werden die Teigrohlinge 101 von unterschiedlichen Ausstechverbünden 34 durch die Stechkanten voneinander durch Ausstechen getrennt.

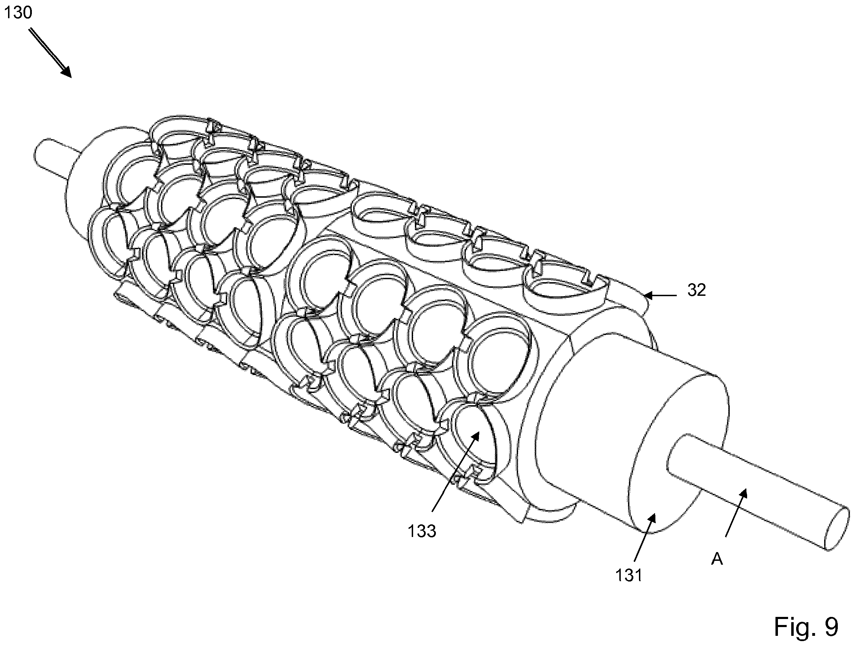

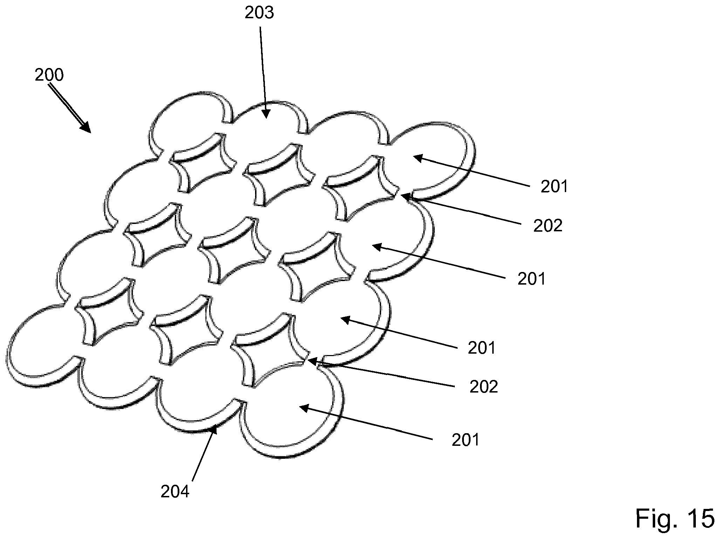

Man erkennt, dass die Teigverarbeitungsmaschine 1 nach Fig. 7 alternativ mit einem Ausstechwerkzeug 130 gemäß Fig. 9 bis 14 entsprechend ausgeführt sein kann. Nach einer solchen Aufführung werden Teigrohlingsverbünde, wie in Fig. 15 dargestellt, mit sechszehn Teigrohlingen 201 erhalten.

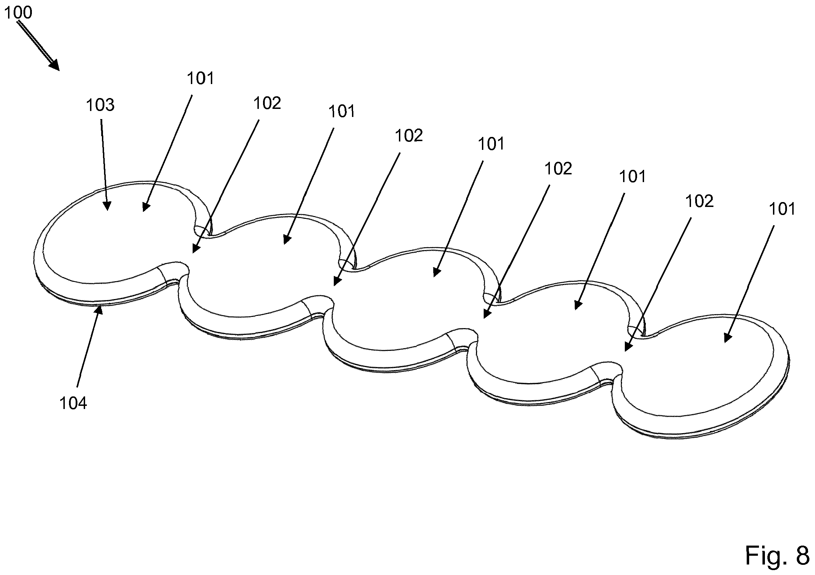

Man sieht in Fig. 7 hinter dem Ausstechwerkzeug 30 auf dem ersten Förderband 10 einen Teigrohlingsverbund 100, wie er auch in perspektivischer Ansicht in **Fig. 8** zu erkennen ist. Hier ist insbesondere ein Teigrohlingsverbund 100 mit fünf Teigrohlingen 101 zu sehen, die linear hintereinander gereiht sind. Dabei haben die Teigrohlinge 101 jeweils eine scheibenförmige und runde Grundform mit flacher Oberseite 103 und flacher Unterseite 104. Benachbarte Teigrohlinge 101 sind jeweils über einen Teigsteg 102 miteinander verbunden, wobei jeder Teigsteg 102 eine Höhe von 100% der angrenzenden Teigrohlinge 101 aufweist. Die Stegbreite der Teigstege 102 ist kleiner als 20% der Umfangslänge der jeweils angrenzenden Teigrohlinge 101. Er beträgt insbesondere weniger als 12%. Auf der Oberseite 103 der Teigrohlinge 101 sind umfangsseitige Kantenradien ausgebildet, die größer sind als die Kantenradien auf der Unterseite 104. Insbesondere sind die oberen Kantenradien wenigstens doppelt so groß wie die unteren Kantenradien, und besonders bevorzugt wenigstens dreimal so groß. Fertigungstechnisch kann dies durch einen innenseitigen Kantenradius an einer Steckkante herbeigeführt werden. Hierdurch wird die Teigmasse nämlich an der Stechkante nach unten gezogen. Es kommen abweichend zu den fünf Teigrohlingen 101 auch Ausgestaltungen von Teigrohlingsverbünden 100 in Betracht, die wenigstens zwei und vorzugsweise unter zehn Teigrohlinge 101 aufweisen. Vorzugsweise haben die Teigrohlinge einen Durchmesser von 4 cm bis 15 cm, und weiter bevorzugt zwischen 4 cm und 10 cm.

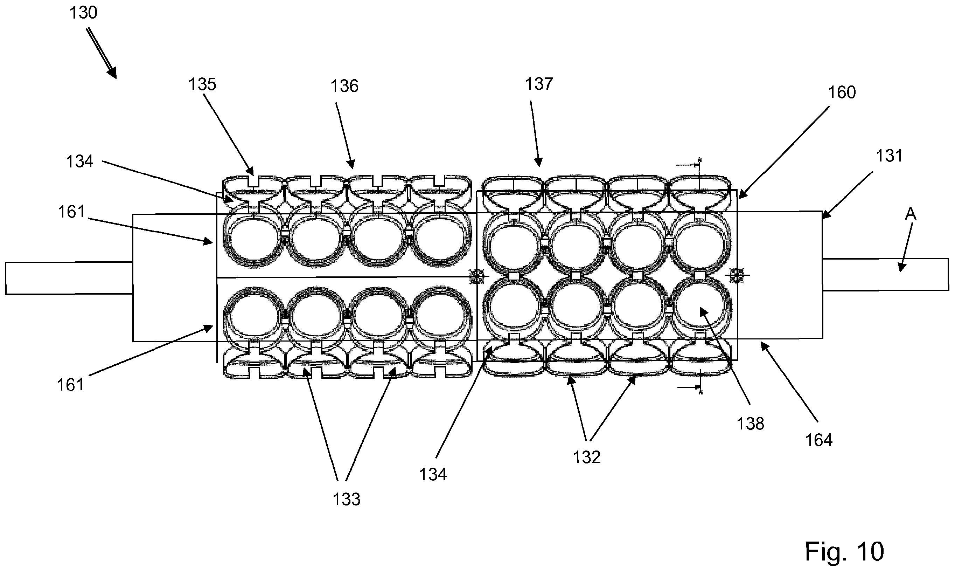

**Fig. 9** zeigt ein Ausstechwerkzeug 130 nach einer alternativen Ausführung zum Ausstechen von Teigrohlingen. Dieses verfügt über eine um eine Trommelachse A rotierbar gelagerte Trommel 131, die an ihrem Umfang nach außen ragende Stechkanten 132 hat. Die Stechkanten 132 bilden einzelne Ausstechformen 133 aus, die über den Umfang der Trommel 131 verteilt angeordnet sind. Bezüglich der technischen Details in Fig. 9 wird auf den vergrößerten Ausschnitt des Ausstechwerkzeugs 130 in Fig. 10 verwiesen.

In **Fig. 10** erkennt man, dass die Ausstechformen 133 insbesondere einen runden bzw. kreisförmigen Umfang aufweisen. Die Ausstechformen 133 sind in Ausstechverbünde 134 mit jeweils sechszehn Ausstechformen 133 unterteilt. Die Anzahl an Ausstechformen 133 ist also bei jedem Ausstechverbund 134 gleich. Dabei stehen die Ausstechformen 133 eines Ausstechverbunds 134 über Unterbrechungen 135 in den Stechkanten 132 miteinander in Verbindung, damit beim Ausstechen ein verbindender Teigsteg zwischen benachbarten Teigrohlingen eines Ausstechverbundes 134 verbleibt. Man erkennt, dass die sechszehn (vier mal vier) Ausstechformen 133 eines Ausstechverbundes 134 in rechteckiger Fläche, hier quadratisch, aneinandergeordnet sind und nicht mit Ausstechformen 133 eines anderen Ausstechverbundes 134 in Verbindung stehen. Hierzu weisen die einzelnen Ausstechformen 133 mit Ausnahme der Unterbrechungen 135 zur Ausbildung der Verbindungen mit benachbarten Ausstechformen 133 einen geschlossenen Umfang auf.

Im Bereich der Unterbrechungen 135 tangieren sich die benachbarten Ausstechformen 133 eines Ausstechverbundes 134.

Des Weiteren sieht man, dass jeweils zwei der Ausstechverbünde 134 hintereinander gereiht und ringförmig über den Umfang der Trommel 131 verteilt angeordnet sind. Hierdurch werden ein erster Ausstechring 136, ein zweiter Ausstechring 137 ausgebildet. Wie in Fig. 9 zu sehen ist, sind hier zwei Ausstechringe vorgesehen.

Die Stechkanten 132 von benachbarten Ausstechverbünden 134 sind dabei stets beabstandet voneinander, damit ein stabiles Netz zum Abheben des Rest- bzw. Rückteigs verbleibt. Hierzu trägt auch bei, dass die Ausstechverbünde 134 von benachbarten Ausstechringen 136, 137 um einen Drehwinkel um die Trommelachse A versetzt zueinander angeordnet sind, hier insbesondere um die Hälfte der Länge der Ausstechverbünde 134.

Ferner erkennt man in Fig. 10, dass die Ausstechformen 133 jeweils einen Formboden 138 aufweisen, der von den Stechkanten 132 eingefasst ist. Dabei weist wenigstens eine Ausstechform 133 eines Ausstechverbunds 134 eine zeichnerisch nicht dargestellte Entlüftungsöffnung auf, die hier insbesondere im Formboden 138 angeordnet ist.

Die Ausgestaltung des in den Fig. 9 und 10 gezeigten Ausstechwerkzeugs 130 weist die Besonderheit auf, dass die Stechkanten 132 an einer austauschbaren Manschette 160 der Trommel 131 ausgebildet sind. Hierzu ist die Manschette 160 auf einer Trägerwalze 164 der Trommel 131 befestigt. Jeweils ein Ausstechverbund 134 liegt dabei auf einer Teilschale 161 der Manschette 160.

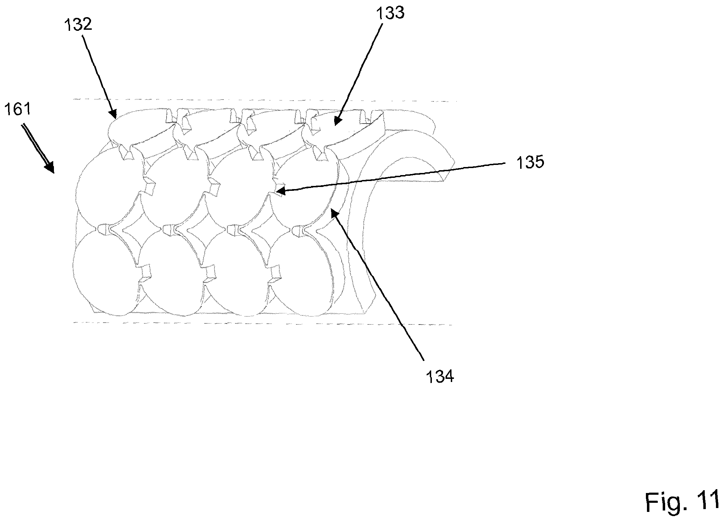

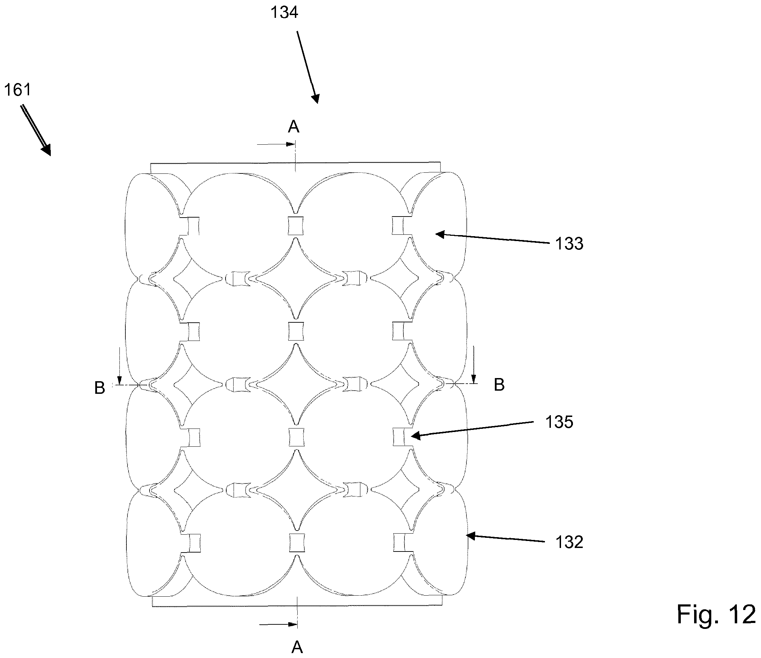

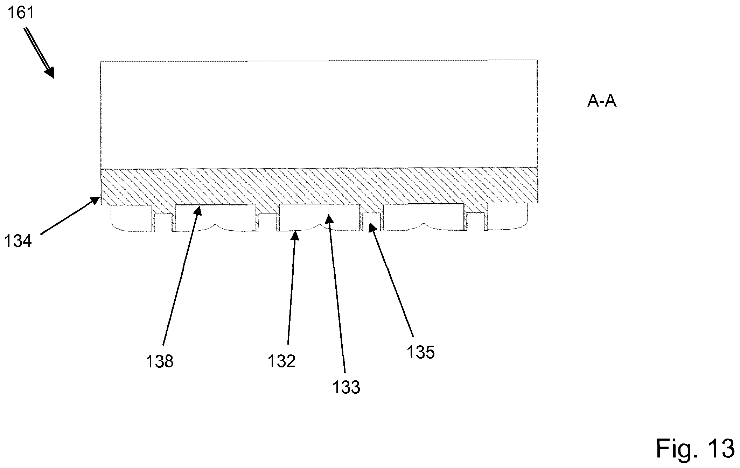

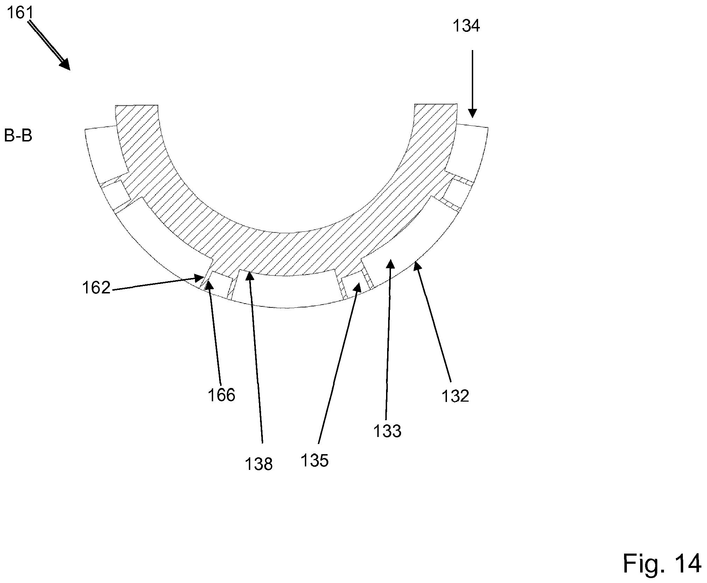

Eine solche Teilschale 161 ist in unterschiedlichen Ansichten in den **Fig. 11 bis 14** dargestellt. So sieht man eine perspektivische Ansicht der Teilschale 161 in Fig. 11, eine Aufsicht der Teilschale nach Fig. 11 in Fig. 12, einen Längsschnitt entlang A-A durch die Teilschale nach Fig. 12 in Fig. 13 und einen Querschnitt entlang B-B durch die Teilschale nach Fig. 12 in Fig. 14. Die Teilschale 161 ist inklusive der Stechkanten 132 monolithisch ausgebildet, nämlich aus Kunststoff und insbesondere aus Polyoxymethylen (POM) wie POM-C. Zeichnerisch nicht dargestellt ist, wie sich ein Loch vom Formboden 138 nach innen durch die Teilschale 161 erstreckt. Ein solches Loch kann als Schraubenloch oder als Entlüftungsloch genutzt werden.

**Fig. 15** zeigt einen Teigrohlingsverbund in perspektivischer Ansicht. Hier ist insbesondere ein Teigrohlingsverbund 200 mit sechszehn Teigrohlingen 201 zu sehen, die in der Form eines Rechtecks, hier eines Quadrats, zusammengelegert sind. Dabei haben die Teigrohlinge 201 jeweils eine scheibenförmige und runde Grundform mit flacher Oberseite 203 und flacher Unterseite 204. Benachbarte Teigrohlinge 201 sind jeweils über einen Teigsteg 202 miteinander verbunden, wobei jeder Teigsteg 202 hier eine Höhe von 100% der angrenzenden Teigrohlinge 201 aufweist. Die Stegbreite der Teigstege 202 ist kleiner als 20% der Umfangslänge der jeweils angrenzenden Teigrohlinge 201. Er beträgt insbesondere weniger als 12%. Auf der Oberseite 103 der Teigrohlinge 201 sind umfangsseitige Kantenradien ausgebildet, die größer sind als die Kantenradien auf der Unterseite 204. Insbesondere sind die oberen Kantenradien wenigstens doppelt so groß wie die unteren Kantenradien, und besonders bevorzugt wenigstens dreimal so groß. Fertigungstechnisch kann dies durch einen innenseitigen Kantenradius an einer Steckkante herbeigeführt werden. Hierdurch wird die Teigmasse nämlich an der Stechkante nach unten gezogen. Vorzugsweise haben die Teigrohlinge einen Durchmesser von 4 cm bis 15 cm, und weiter bevorzugt zwischen 4 cm und 10 cm.

Die Erfindung ist nicht auf eine der vorbeschriebenen Ausführungsformen beschränkt, sondern in vielfältiger Weise abwandelbar.

Optional kann eine Austauschtrommel vorgesehen sein, die gegen die Trommel 31 austauschbar ist, und an ihrem Umfang nach außen ragende Stechkanten aufweist, welche einzelne Ausstechformen ausbilden, die über den Umfang der Austauschtrommel verteilt angeordnet sind und eine andere Umfangsgeometrie haben als die Ausstechformen 33 der Trommel 31. Hierdurch könnte zwischen unterschiedlichen Produkten oder Produktgrößen gewechselt werden.

Ergänzt sein kann die Teigverarbeitungsmaschine 1 durch eine Igelwalze in Laufrichtung des ersten Förderbands 10 vor dem Ausstechwerkzeug 30, mit welcher die Teigbahn 110 perforiert werden kann. Diese kann insbesondere eine Trommelachse rotierbar gelagerte Trommel aufweisen, die an ihrem Umfang nach außen ragende Spitzen hat, mit denen die Trommel gegenüber dem ersten Förderband läuft.

In Laufrichtung des ersten Förderbandes 10 hinter der Trommel 31 ist optional ein zweites Förderband oberhalb des ersten Förderbands 10 anordenbar, wobei eine Umlenkrolle, um die das zweite Förderband umgelenkt wird, beabstandet sowie insbesondere quer ausgerichtet oberhalb des ersten Förderbands 10 angeordnet ist. Dabei sollte das zweite Förderband auf der Unterseite der Umlenkrolle im Gleichlauf und auf der Oberseite der Umlenkrolle im Gegenlauf zum ersten Förderband angetrieben sein. Eine auf dem ersten Förderband 10 geförderte Teigbahn 110 kann dann exklusive der ausgestochenen Teigrohlinge 101 über die Umlenkrolle auf das zweite Förderband umgelenkt werden. Das zweite Förderband kann dann zu einer Teigbearbeitungsmaschine führen, die den Rückteig aufbereitet und/oder mit frischem Teig vermengt. Der Rückteig kann dann erneut mit der Aufbringeinrichtung auf das erste Förderband aufgebracht werden.

Für die Herstellung belegter Teigwaren bietet es sich an in Laufrichtung des ersten Förderbandes 10 hinter der Trommel 31 ein Belaggeber zum Belegen der Teigrohlinge 101 beabstandet oberhalb des ersten Förderbandes 10 anzuordnen. Ein solcher Belaggeber kann dazu ausgelegt sein, fluide, pastöse oder feste Beläge auf die Teigrohlinge 101 aufzubringen. Als technische Ausgestaltungen kommen beispielsweise Powershot-Stationen zum Aufschießen eines pastösen Belags oder Wasserfallstation zum Aufbringen von festem Belag durch Herunterfallen in Betracht. Dies können beispielsweise Tomatensoße und anschließend Beläge wie Pilze, Salami, Schinken, Käse und weitere Pizzabeläge sein. Das Belegen der Teigrohlinge 101 auf dem ersten Förderband 10 mit einem Belag erfolgt vorzugsweise nach dem Ausstechen und nach dem Abheben des Rückteigs.

Außerdem kann die Teigverarbeitungsmaschine 1 hinter dem Ausstechwerkzeug 30 und vorzugsweise hinter der Umlenkrolle des zweiten Förderbands durch einen Durchlaufofen führen. Hier werden die Teigrohlinge 101 dann vorgebacken oder ausgebacken. Je nach Produkt kann der Belaggeber in Laufrichtung des ersten Förderbands 10 hinter oder vor dem Durchlaufofen angeordnet sein.

Zur Herstellung von Tiefkühlware kann in Laufrichtung des ersten Förderbands 10 hinter dem Belaggeber ein Durchlauffroster zum Herunterkühlen angeordnet sein. Hier werden die Teigrohlinge dann eigefroren.

Schließlich kann die Teigverarbeitungsmaschine 1 in Laufrichtung des ersten Förderbands 10 hinter dem Durchlauffroster um eine Packstation ergänzt sein. Dies kann wenigstens eine Station aus der Gruppe (Schlauch-)Beutelstation, Faltschachtel-Station, Umkarton-Station und Palettierungsstation umfassen. Hier werden die Teigrohlinge 101 dann in Verpackungsgrößen entsprechend der Anzahl an Ausstechformen 33 der Ausstechverbünde 34 verpackt.

Sämtliche aus den Ansprüchen, der Beschreibung und der Zeichnung hervorgehenden Merkmale und Vorteile, einschließlich konstruktiver Einzelheiten, räumlicher Anordnungen und Verfahrensschritten, können sowohl für sich als auch in den verschiedensten Kombinationen erfindungswesentlich sein.

### Bezugszeichenliste

- 1: Teigverarbeitungsmaschine
- 10: erstes Förderband
- 30, 130: Ausstechwerkzeug
- 31, 131: Trommel
- 32, 132: Stechkanten
- 33, 133: Ausstechform
- 34, 134: Ausstechverbund
- 35, 135: Unterbrechung
- 36, 136: erster Ausstechring
- 37, 137: zweiter Ausstechring
- 38, 138: Formboden
- 60, 160: Manschette
- 61, 161: Teilschale
- 62, 162: Innenseite (Stechkanten)
- 63: Kantenradius
- 64, 164: Trägerwalze
- 65: Entlüftungsöffnung
- 66, 166: Außenseite
- 70: Stützvorrichtung
- 100, 200: Teigrohlingsverbund
- 101, 201: Teigrohling
- 102, 202: Teigsteg
- 103, 203: Oberseite
- 104, 204: Unterseite
- 110: Teigbahn
- A: Trommelachse

## Patentansprüche

1. **Teigverarbeitungsmaschine** (1) mit einem ersten Förderband (10) zum Fördern einer Teigbahn (110) und mit einem Ausstechwerkzeug (30, 130) zum Ausstechen von Teigrohlingen (101, 201), wobei das Ausstechwerkzeug (30, 130) eine um eine Trommelachse (A) rotierbar gelagerte Trommel (31, 131) aufweist, die an ihrem Umfang mit nach außen ragenden Stechkanten (32, 132) vorgesehen ist, mit denen die Trommel (31, 131) gegenüber und/oder auf dem ersten Förderband (10) läuft, wobei mehrere einzelne Ausstechformen (33, 133) die Stechkanten (32, 132) bilden, wobei die Ausstechformen (33, 133) in Ausstechverbünde (34, 134) mit jeweils wenigstens zwei Ausstechformen (33, 133) angeordnet sind, wobei mehrere Ausstechverbünde (34, 134) über den Umfang der Trommel (31, 131) verteilt angeordnet sind, **dadurch gekennzeichnet, dass** die Ausstechformen (33, 133) eines Ausstechverbunds (34, 134) über Unterbrechungen (35, 135) in den Stechkanten (32, 132) miteinander in Verbindung stehen und dass die beiden Ausstechformen (33, 133) am Ende der Reihe der Ausstechformen (33, 133) eines Ausstechverbunds (34, 134) jeweils eine Unterbrechung (35, 135) aufweisen, und die anderen Ausstechformen (33, 133) in zentraler Position zwischen zwei weiteren Ausstechformen (33, 133) jeweils zwei Unterbrechungen aufweisen (35, 135).

2. Teigverarbeitungsmaschine (1) nach Anspruch 1, **dadurch gekennzeichnet, dass** die Anzahl an Ausstechformen (33, 133) pro Ausstechverbund (34, 134) gleich ist.

3. Teigverarbeitungsmaschine (1) nach einem vorhergehenden Ansprüche, **dadurch gekennzeichnet, dass** wenigstens zwei der Ausstechverbünde (34 ,134) hintereinander gereiht und ringförmig über den Umfang der Trommel (31, 131) verteilt angeordnet sind und einen ersten Ausstechring (36, 136) ausbilden.

4. Teigverarbeitungsmaschine (1) nach Anspruch 3, **dadurch gekennzeichnet, dass** wenigstens zwei der Ausstechverbünde (34, 134) hintereinander gereiht und ringförmig über den Umfang der Trommel (31, 131) verteilt angeordnet sind und einen zweiten Ausstechring (37, 137) ausbilden.

5. Teigverarbeitungsmaschine (1) nach Anspruch 4, **dadurch gekennzeichnet, dass** Ausstechverbünde (34, 134) von benachbarten Ausstechringen (36, 37 oder 136, 137) um einen Drehwinkel um die Trommelachse (A) versetzt zueinander angeordnet sind.

6. Teigverarbeitungsmaschine (1) nach einem der vorhergehenden Ansprüche, **dadurch gekennzeichnet, dass** die Stechkanten (32, 132) an einer austauschbaren Manschette (60, 160) der Trommel (31, 131) ausgebildet sind.

7. Teigverarbeitungsmaschine (1) nach einem der vorhergehenden Ansprüche, **dadurch gekennzeichnet, dass** die Stechkanten (32, 132) auf der Innenseite (62, 162) einen Kantenradius (63) haben, dessen Radius vorzugsweise zwischen 30% und 100%, weiter bevorzugt zwischen 50% und 100% und besonders bevorzugt zwischen 70% und 100% der Wandstärke der Stechkante (32, 132) beträgt.

8. Teigverarbeitungsmaschine (1) nach einem der vorhergehenden Ansprüche, **dadurch gekennzeichnet, dass** eine Austauschtrommel vorgesehen ist, die gegen die Trommel (31, 131) austauschbar ist, und an ihrem Umfang nach außen ragende Stechkanten aufweist, welche einzelne Ausstechformen ausbilden, die über den Umfang der Austauschtrommel verteilt angeordnet sind und eine andere Umfangsgeometrie haben als die Ausstechformen (33, 133) der Trommel (31, 131).

9. **Verfahren** zur Herstellung von Teigwaren mit einer Teigverarbeitungsmaschine (1) nach einem der vorhergehenden Ansprüche, umfassend die Schritte:
a) Aufbringen einer Teigbahn (110) vor dem Ausstechwerkzeug (30, 130) auf das erste Förderband (10);
b) Ausstechen von Teigrohlingen (101, 201) aus der Teigbahn (110) zwischen den Stechkanten (32, 132) und dem ersten Förderband (10).

10. Verfahren nach Anspruch 9, wobei die Stechkanten (32, 132) einzelne Ausstechformen (33, 133) ausbilden, die über den Umfang der Trommel (31, 131) verteilt angeordnet sind und die Ausstechformen (33, 133) in Ausstechverbünde (34, 134) mit jeweils wenigstens zwei Ausstechformen (33, 133) unterteilt sind, wobei die Ausstechformen (33, 133) eines Ausstechverbunds (34, 134) über Unterbrechungen (35, 135) in den Stechkanten (32, 132) miteinander in Verbindung stehen, und wobei beim Ausstechen der Teigrohlinge (101, 201) ein verbindender Teigsteg (102, 202) zwischen Teigrohlingen (101, 201) eines Ausstechverbunds (34, 134) belassen wird.

11. Verfahren nach Anspruch 10, wobei der Teigsteg (102, 202) eine Höhe aufweist, die zwischen 50% und 100%, vorzugsweise zwischen 60% und 100% und besonders bevorzugt zwischen 70% und 100% der Höhe der Teigbahn (110) entspricht.

12. Verfahren nach einem der Ansprüche 9 bis 11, umfassend den Schritt:
c) Abheben der auf dem ersten Förderband (10) geförderten Teigbahn (110) exklusive der ausgestochenen Teigrohlinge (101, 201) nach dem Ausstechen.

13. **Verwendung** einer Teigverarbeitungsmaschine (1) nach einem der Ansprüche 1 bis 8 zur Herstellung von Teigrohlingen (101, 201).

14. Teigrohlingsverbund (100, 200) mit
- entweder zwei bis zehn scheibenförmigen Teigrohlingen (101), die eine runde oder ovale Grundform mit flacher Oberseite (103) und flacher Unterseite (104) aufweisen sowie linear hintereinander gereiht sind oder
- wenigstens drei, insbesondere wenigstens vier, scheibenförmigen Teigrohlingen (201), wobei die Teigrohlinge eine runde oder ovale Grundform mit flacher Oberseite (203) und flacher Unterseite (204) aufweisen und der Teigrohlingsverbund (200) in flächiger Form eines Dreiecks, eines Kreises oder eines Vierecks, insbesondere in rechteckiger Form, ausgestaltet ist,
wobei benachbarte Teigrohlinge (101, 201) jeweils über einen Teigsteg (102, 202) miteinander verbunden sind, wobei jeder Teigsteg (102, 202) eine Höhe zwischen 50% und 100% der angrenzenden Teigrohlinge (101, 201) aufweist, wobei jeder Teigsteg (102, 202) eine Stegbreite aufweist, die kleiner als 20% der Umfangslänge der jeweils angrenzenden Teigrohlinge (101, 201) ist.

## Claims

1. Dough processing machine (1) with a first conveyor belt (10) for conveying a dough strip (110) and with a cutting tool (30, 130) for cutting out dough blanks (101, 201), wherein the cutting tool (30, 130) has a drum (31, 131) which is mounted rotatably about a drum axis (A) and which is provided on its periphery with outwardly projecting cutting edges (32, 132), with which the drum (31, 131) runs opposite to and/or on the first conveyor belt (10), wherein several individual cutting dies (33, 133) form the cutting edges (32, 132), wherein the cutting dies (33, 133) are arranged in cutting assemblies (34, 134), each cutting assembly having at least two cutting dies (33, 133), wherein a plurality of cutting assemblies (34, 134) are distributed over the circumference of the drum (31, 131), **characterized in that** the cutting dies (33, 133) of a cutting assembly (34, 134) are connected to one another via interruptions (35, 135) in the cutting edges (32, 132), and **in that** the two cutting dies (33, 133) are arranged at the end of the row of cutting assemblies (34, 134) at the end of the row of cutting dies (33, 133) of a cutting die assembly (34, 134) each have an interruption (35, 135), and the other cutting dies (33, 133) in central position between two further cutting dies (33, 133) each have two interruptions (35, 135).

2. Dough processing machine (1) according to claim 1, **characterized in that** the number of cutting dies (33, 133) per cutting assembly (34, 134) is the same.

3. Dough processing machine (1) according to one of the preceding claims, **characterized in that** at least two of the cutting composites (34, 134) are arranged in series and are annularly distributed over the circumference of the drum (31, 131) and form a first cutting ring (36, 136).

4. Dough processing machine (1) according to claim 3, **characterized in that** at least two of the cutting assemblies (34, 134) are arranged in series and are annularly distributed over the circumference of the drum (31, 131) and form a second cutting ring (37, 137).

5. Dough processing machine (1) according to claim 4, **characterized in that** cut-out rings (34, 134) of adjacent cut-out rings (36, 37 or 136, 137) are arranged offset from one another by an angle of rotation about the drum axis (A).

6. Dough processing machine (1) according to one of the preceding claims, **characterized in that** the cutting edges (32, 132) are formed on a replaceable sleeve (60, 160) of the drum (31, 131).

7. Dough processing machine (1) according to one of the preceding claims, **characterized in that** the cutting edges (32, 132) on the inner side (62, 162) have an edge radius (63), which is preferably between 30% and 100%, further preferably between 50% and 100% and particularly preferably between 70% and 100% of the wall thickness of the cutting edge (32, 132).

8. Dough processing machine (1) according to one of the preceding claims, **characterized in that** an exchange drum is provided, which is exchangeable against the drum (31, 131) and has outwardly projecting cutting edges on its circumference, which form individual cutting forms, which are arranged distributed over the circumference of the exchange drum and have a different circumferential geometry than the cutting forms (33, 133) of the drum (31, 131).

9. Method for producing dough products with a dough processing machine (1) according to any of the preceding claims, comprising the steps:
(a) placing a dough strip (110) on the first conveyor belt (10) in front of the cutting tool (30, 130);
b) cutting out dough blanks (101, 201) from the dough strip (110) between the cutting edges (32, 132) and the first conveyor belt (10).

10. Method according to claim 9, wherein the cutting edges (32, 132) form individual cutting dies (33, 133) that are arranged distributed over the circumference of the drum (31, 131) and the cutting dies (33, 133) are subdivided into cutting assemblies (34, 134) with at least two cutting dies (33, 133) each, wherein the cutting dies (33, (33, 133) of a cutting assembly (34, 134) are connected to one another via interruptions (35, 135) in the cutting edges (32, 132), and a connecting dough bar (102, 202) is left between dough blanks (101, 201) of a cutting assembly (34, 134) during cutting of the dough blanks (101, 201).

11. Method according to claim 10, wherein the dough bar (102, 202) has a height corresponding to between 50% and 100%, preferably between 60% and 100% and particularly preferably between 70% and 100% of the height of the dough strip (110).

12. Method according to any one of claims 9 to 11, comprising the step:
(c) lifting the dough strip (110) conveyed on the first conveyor belt (10) excluding the cut dough blanks (101, 201) after cutting.

13. Use of a dough processing machine (1) according to any one of claims 1 to 8 for producing dough blanks (101, 201).

14. Dough blank assembly (100, 200) comprising
- either two to ten disc-shaped dough blanks (101), which have a round or oval basic shape with a flat upper side (103) and a flat lower side (104) and are lined up linearly one behind the other, or
- at least three, in particular at least four, disc-shaped dough blanks (201), the dough blanks having a round or oval basic shape with a flat upper side (203) and a flat lower side (204), and the dough blank assembly (200) being designed in the planar shape of a triangle, a circle or a quadrilateral, in particular in rectangular shape,
adjacent dough blanks (101, 201) each being connected to one another via a dough bar (102, 202), each dough bar (102, 202) having a height of between 50% and 100% of the adjacent dough blanks (101, 201), each dough bar (102, 202) having a bar width which is less than 20% of the circumferential length of the respective adjacent dough blanks (101, 201).

## Revendications

1. Machine de traitement de la pâte (1) avec une première bande transporteuse (10) pour le transport d'une bande de pâte (110) et avec un outil de coupe (30, 130) pour découper des flans de pâte (101, 201), l'outil de coupe (30, 130) présentant un tambour (31, 131) qui est monté de manière à pouvoir tourner autour d'un axe de tambour (A) et qui est pourvu sur sa circonférence d'arêtes de coupe (32, 132) faisant saillie vers l'extérieur avec lequel le tambour (31, 131) s'étend en face et/ou sur la première bande transporteuse (10), une pluralité d'outils de coupe individuels (33, 133) formant les arêtes de coupe (32, 132), les outils de coupe (33, 133) étant disposés dans des groupes de coupe (34, 134) comportant chacun au moins deux outils de coupe (33, 133), plusieurs groupes de coupe (34, 134) étant répartis sur la circonférence du tambour (31, 131), **caractérisé en ce que** les outils de coupe (33, 133) d'un groupe de coupe (34, 134) sont reliés entre eux par des interruptions (35, 135) dans les arêtes de coupe (32, 132) et **en ce que** les deux outils de coupe (33, 133) sont disposés à la fin de la rangée d'outils de coupe (33, 133) d'un groupe de coupe (34, 134) présentent chacun une interruption (35, 135), et les autres outils de coupe (33, 133) en position centrale entre deux autres outils de coupe (33, 133) présentent chacun deux interruptions (35, 135).

2. Machine de traitement de la pâte (1) selon la revendication 1, **caractérisée en ce que** le nombre d'outils de coupe (33, 133) par groupe de coupe (34, 134) est le même.

3. Machine de traitement de la pâte (1) selon l'une quelconque des revendications précédentes, **caractérisée en ce qu'**au moins deux desdits groupes de coupe (34, 134) sont disposés en série et répartis de manière annulaire autour de la circonférence dudit tambour (31, 131) et forment un premier anneau de coupe (36, 136).

4. Machine de traitement de la pâte (1) selon la revendication 3, **caractérisée en ce qu'**au moins deux desdits groupes de coupe (34, 134) sont disposés en série et répartis de manière annulaire sur la circonférence dudit tambour (31, 131) et forment un deuxième anneau de coupe (37, 137).

5. Machine de traitement de la pâte (1) selon la revendication 4, **caractérisée en ce que** des groupes de coupe (34, 134) d'anneaux de coupe adjacents (36, 37 ou 136, 137) sont disposés en étant décalés les uns par rapport aux autres d'un angle de rotation autour de l'axe du tambour (A).

6. Machine de traitement de la pâte (1) selon l'une quelconque des revendications précédentes, **caractérisée en ce que** les arêtes de coupe (32, 132) sont formés sur un manchon remplaçable (60, 160) du tambour (31, 131).

7. Machine de traitement de la pâte (1) selon l'une des revendications précédentes, **caractérisée en ce que** les arêtes de coupe (32, 132) sur le côté intérieur (62, 162) présentent un rayon de bord (63) dont le rayon est de préférence compris entre 30 % et 100 %, plus préférablement entre 50 % et 100 % et particulièrement préférablement entre 70 % et 100 % de l'épaisseur de paroi de l'arêtes de coupe (32, 132).

8. Machine de traitement de la pâte (1) selon l'une des revendications précédentes, **caractérisée en ce qu'**il est prévu un tambour d'échange qui peut être échangé contre le tambour (31, 131) et qui présente sur sa circonférence des arêtes de coupe faisant saillie vers l'extérieur, qui forment des outils de coupe individuelles, qui sont disposées réparties sur la circonférence du tambour d'échange et qui présentent une géométrie circonférentielle différente des outils de coupe (33, 133) du tambour (31, 131).

9. Procédé de fabrication de produits à base de pâte avec une machine de traitement de la pâte (1) selon l'une quelconque des revendications précédentes, comprenant les étapes :
a) en plaçant une bande de pâte (110) sur le premier tapis roulant (10) avant l'outil de coupe (30, 130) ;
b) découpage de flans de pâte (101, 201) dans la bande de pâte (110) entre les arêtes de coupe (32, 132) et le premier bande transporteuse (10).

10. Procédé selon la revendication 9, dans lequel les arêtes de coupe (32, 132) forment des outils de coupe individuels (33, 133) qui sont disposés répartis sur la circonférence du tambour (31, 131) et les outils de coupe (33, 133) sont divisés en groupes de coupe (34, 134) comportant chacun au moins deux outils de coupe (33, 133), les outils de coupe (33, 133) d'un groupe de coupe (34, 134) sont reliés entre eux par des interruptions (35, 135) dans les arêtes de coupe (32, 132), et dans lequel, lorsque les flans de pâte (101, 201) sont coupés, une bande de pâte de liaison (102, 202) est laissée entre les flans de pâte (101, 201) d'un groupe de coupe (34, 134).

11. Procédé selon la revendication 10, dans laquelle la bande de pâte (102, 202) a une hauteur correspondant à entre 50% et 100%, de préférence entre 60% et 100% et plus préférablement entre 70% et 100% de la hauteur de la bande de pâte (110).

12. Procédé selon l'une des revendications 9 à 11, comprenant l'étape :
c) soulever la bande de pâte (110) transportée sur le premier tapis roulant (10) à l'exclusion des flans de pâte découpés (101, 201) après la découpe.

13. L'utilisation d'une machine de traitement de la pâte (1) selon l'une des revendications 1 à 8 pour la production de flans de pâte (101, 201).

14. Assemblage de flan de pâte (100, 200) comprenant
- soit deux à dix disques de pâte (101), de forme ronde ou ovale avec une face supérieure plate (103) et une face inférieure plate (104), alignés linéairement les uns derrière les autres
- soit au moins trois, en particulier au moins quatre, flans de pâte en forme de disque (201), les flans de pâte ayant une forme de base ronde ou ovale avec une face supérieure plate (203) et une face inférieure plate (204) et le composite de flans de pâte (200) étant formé dans la forme plane d'un triangle, d'un cercle ou d'un quadrilatère, en particulier sous forme rectangulaire
des flans de pâte adjacents (101, 201) étant chacun reliés entre eux par une bande de pâte (102, 202), chaque bande de pâte (102, 202) ayant une hauteur comprise entre 50% et 100% des flans de pâte adjacents (101, 201), chaque bande de pâte (102, 202) ayant une largeur de bande qui est inférieure à 20% de la longueur circonférentielle des flans de pâte adjacents respectifs (101, 201).
